# EUROPEAN PATENT APPLICATION

(11) **EP 3 101 982 A1**
(43) Date of publication of application: **07.12.2016**
(21) Application number: 14880523.7
(22) Date of filing: 09.12.2014
(51) Int. Cl.: H04W 72/12, H04W 28/04, H04W 72/04

(54) **BASE STATION, TRANSMISSION METHOD, MOBILE STATION, AND RETRANSMISSION CONTROL METHOD**

(30) Priority: 30.01.2014 JP 2014016189; 20.03.2014 JP 2014059259
(71) Applicant: NTT Docomo, Inc., Tokyo 100-6150 (JP)
(72) Inventor: YASUKAWA, Shimpei, Tokyo 100-6150 (JP); MU, Qin, Beijing 100190 (CN); LIU, Liu, Beijing 100190 (CN); JIANG, Huiling, Beijing 100190 (CN)
(74) Representative: Hoffmann Eitle
(86) International application number: PCT/JP2014/082483
(87) International publication number: WO 2015/114952

(57) **Abstract**

The present invention aims at reducing or avoiding PUCCH conflict among terminals if a PDSCH and a PDCCH for indicating assignment information required to receive the PDSCH are transmitted in different subframes. One aspect of the present invention relates to a base station for transmitting a physical downlink shared channel and a physical downlink control channel in different subframes, wherein the physical downlink control channel indicates assignment information required to receive the physical downlink shared channel, comprising: a resource assignment information storage unit configured to store resource assignment information for a physical uplink control channel or resource assignment information for a physical downlink control channel; a resource assignment unit configured to assign a resource for the physical downlink control channel with reference to the resource assignment information storage unit such that no conflict arises among physical uplink control channels from multiple mobile stations; and a transmission unit configured to transmit the physical downlink control channel and the physical downlink shared channel.

## Description

### TECHNICAL FIELD

The present invention relates to a base station, a transmission method, a mobile station and a retransmission control method.

### BACKGROUND ART

Recently, there have been increasing demands of MTC (Machine Type Communication) terminals. For example, the MTC terminal is a power meter, a gas meter, a vending machine, a vehicle and any other communication terminals installed in industrial equipment and so on. Some specifications for such a MTC terminal different from those for a normal terminal (UE: User Equipment) are discussed due to characteristics of non-mobility, periodic transmission of a small amount of data and so on (see 3GPP TR36.888 V12.0.0 (2013-06)).

In light of the above-stated usage implementations, for the MTC terminals, some techniques to achieve low-cost MTC terminals are required. Also, it is considered that the MTC terminals may be used at locations where propagation loss is significantly large, such as within an indoor control box. Accordingly, there is a need of some techniques to enhance coverage of the MTC terminals.

### SUMMARY OF INVENTION

### [PROBLEM TO BE SOLVED BY THE INVENTION]

Several modes including a low cost mode and an enhanced coverage mode are discussed for the MTC terminals.

The low cost mode is a mode designed to lower the cost of the MTC terminals. For example, for the low cost mode of MTC terminals, it is designed to downsize a buffer in the MTC terminal by reducing a transmission data rate or decreasing a reception bandwidth of a base band of data signals. Also, two antennas are provided in a normal terminal whereas a single antenna is provided in the MTC terminals to lower the cost.

On the other hand, the enhanced coverage mode is a mode to enhance the coverage of the MTC terminal. Various functions to improve communication quality are provided in the enhanced coverage mode of MTC terminals.

Different communication specifications are used for normal terminals for LTE (Long Term Evolution) systems and MTC terminals. In one example, for the normal terminal for the LTE system, a PDSCH (Physical Downlink Shared Channel) for transmitting downlink data and a PDCCH (Physical Downlink Control Channel) for indicating assignment information (DL assignment) required to receive the PDSCH are transmitted in the same subframe. For the MTC terminal, on the other hand, the PDSCH and the PDCCH are transmitted in different subframes. Particularly, the PDCCH and the PDSCH are iteratively transmitted in different subframes for the enhanced coverage mode of MTC terminals so as to improve reception quality of the MTC terminals.

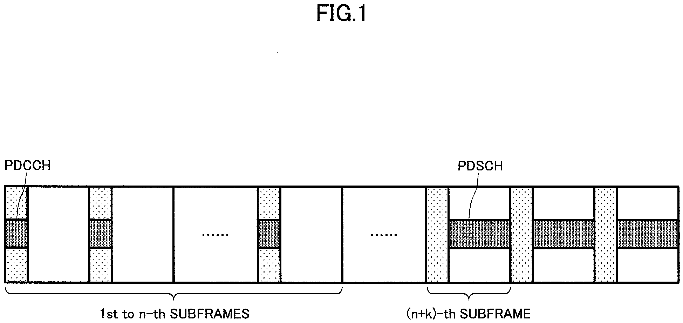

FIG. 1 illustrates a relationship between the PDCCH and the PDSCH in the enhanced coverage mode. A relationship between the PDCCH and the PDSCH of indication timings of the assignment information in the enhanced coverage mode is predefined, and as illustrated in FIG. 1, the PDCCH and the PDSCH are not transmitted in the same subframe but the PDSCH is transmitted in multiple subframes after the PDCCH is transmitted in multiple subframes. Specifically, assuming that the last subframe for transmitting the PDCCH is the n-th subframe, transmission of the PDSCH starts from the (n+k)-th subframe (k>0). In the low cost mode, on the other hand, such iterative transmissions are not typically performed, and after the PDCCH is transmitted in a certain subframe, the PDSCH is transmitted in other subframes.

In any of the low cost mode and the enhanced coverage mode, acknowledgement information (ACK/NACK) is transmitted in a PUCCH (Physical Uplink Control Channel). In the LTE system, PUCCH resources are assigned in accordance with formula (1) as follows (see 3GPP TS36.213 V12.0.0 (2013-12)).

n_{PUCCH}=n_{CCE}+N_{PUCCH} (1),

where n_{PUCCH} is a number for representing the PUCCH resource, n_{CCE} is the first CCE (Control Channel Element) index of the PDCCH corresponding to the PUCCH, and N_{PUCCH} is an index configured in upper layer signaling. In other words, the PUCCH resource is calculated from an assignment position of the PDCCH resource.

After a constant time period (for example, after 4 ms) of receiving the PDSCH, a terminal uses a resource found by formula (1) to transmit the PUCCH. Formula (1) derives the PUCCH resource under assumption where the PDCCH and the PDSCH are transmitted in the same subframe. Accordingly, if the PDCCH and the PDSCH are transmitted in different subframes, there is a possibility where there may arise conflict of the PUCCH resource among terminals.

Such conflict of the PUCCH resource arises under the case where there are a mixture of users having different relationships between subframes for transmitting the PDCCH and subframes for transmitting the PDSCH. Particularly, if the PDCCH and the PDSCH are iteratively transmitted such as the case for the enhanced coverage mode of MTC terminals, it is expected that the conflicting probability of the PUCCH resources may further increase.

An object of the present invention is to avoid or reduce the PUCCH conflict among terminals under the case where the PDSCH and the PDCCH for indicating assignment information required to receive the PDSCH are transmitted in different subframes.

### [MEANS FOR SOLVING THE PROBLEM]

A base station according to one embodiment of the present invention transmits a physical downlink shared channel and a physical downlink control channel in different subframes, wherein the physical downlink control channel indicates assignment information required to receive the physical downlink shared channel, and includes:
a resource assignment information storage unit configured to store resource assignment information for a physical uplink control channel or resource assignment information for a physical downlink control channel;
a resource assignment unit configured to assign a resource for the physical downlink control channel with reference to the resource assignment information storage unit such that no conflict arises among physical uplink control channels from multiple mobile stations; and
a transmission unit configured to transmit the physical downlink control channel and the physical downlink shared channel.

Also, a transmission method according to one embodiment of the present invention is used in a base station for transmitting a physical downlink shared channel and a physical downlink control channel in different subframes, wherein the physical downlink control channel indicates assignment information required to receive the physical downlink shared channel, and includes:
assigning a resource for the physical downlink control channel with reference to resource assignment information for a physical uplink control channel or resource assignment information for a physical downlink control channel such that no conflict arises among physical uplink control channels from multiple mobile stations; and
transmitting the physical downlink control channel and the physical downlink shared channel.

Also, a mobile station according to one embodiment of the present invention receives a physical downlink shared channel and a physical downlink control channel in different subframes, wherein the physical downlink control channel indicates assignment information required to receive the physical downlink shared channel, and includes:
a determination unit configured to perform retransmission determination for the physical downlink shared channel; and
a transmission unit configured to refrain from transmitting a physical uplink control channel if the physical downlink shared channel does not have to be retransmitted, and transmit acknowledgement information for requesting retransmission in the physical uplink control channel if the physical downlink shared channel has to be retransmitted.

Also, a retransmission control method according to one embodiment of the present invention is used in a mobile station for receiving a physical downlink shared channel and a physical downlink control channel in different subframes, wherein the physical downlink control channel indicates assignment information required to receive the physical downlink shared channel, and includes:
performing retransmission determination for the physical downlink shared channel; and
refraining from transmitting a physical uplink control channel if the physical downlink shared channel does not have to be retransmitted, and transmitting acknowledgement information for requesting retransmission in the physical uplink control channel if the physical downlink shared channel has to be retransmitted.

Also, a base station according to one embodiment of the present invention transmits a physical downlink shared channel and a physical downlink control channel in different subframes, wherein the physical downlink control channel indicates assignment information required to receive the physical downlink shared channel, and includes:
a resource assignment information storage unit configured to store resource assignment information for a physical uplink control channel or resource assignment information for a physical downlink control channel;
a resource assignment unit configured to determine a resource for a physical uplink control channel with reference to the resource assignment information storage unit; and
a transmission unit configured to transmit an indicator for determining the resource to be used by a mobile station for the physical uplink control channel.

Also, a transmission method according to one embodiment of the present invention is used in a base station for transmitting a physical downlink shared channel and a physical downlink control channel in different subframes, wherein the physical downlink control channel indicates assignment information required to receive the physical downlink shared channel, and includes:
determining a resource for a physical uplink control channel with reference to resource assignment information for a physical uplink control channel or resource assignment information for a physical downlink control channel; and
transmitting an indicator for determining the resource to be used by a mobile station for the physical uplink control channel.

Also, a mobile station according to one embodiment of the present invention receives a physical downlink shared channel and a physical downlink control channel in different subframes, wherein the physical downlink control channel indicates assignment information required to receive the physical downlink shared channel, and includes:
a reception unit configured to receive an indicator for determining a resource for a physical uplink control channel;
a determination unit configured to perform retransmission determination for the physical downlink shared channel; and
a transmission unit configured to use the resource for the physical uplink control channel determined in accordance with the received indicator to transmit acknowledgement information indicative of the retransmission determination in the physical uplink control channel.

Also, a retransmission control method according to one embodiment of the present invention is used in a mobile station for receiving a physical downlink shared channel and a physical downlink control channel in different subframes, wherein the physical downlink control channel indicates assignment information required to receive the physical downlink shared channel, and includes:
receiving an indicator for determining a resource for a physical uplink control channel;
performing retransmission determination for the physical downlink shared channel; and
using the resource for the physical uplink control channel determined in accordance with the received indicator to transmit acknowledgement information indicative of the retransmission determination in the physical uplink control channel.

### [ADVANTAGE OF THE INVENTION]

According to the present invention, the PUCCH conflict among terminals can be avoided or reduced under the case where the PDSCH and the PDCCH for indicating assignment information required to receive the PDSCH are transmitted in different subframes.

### BRIEF DESCRIPTION OF DRAWINGS

FIG. 1 is a diagram for illustrating a relationship between a PDCCH and a PDSCH in the enhanced coverage mode;
FIG. 2 is a (first) diagram for illustrating PUCCH conflict due to iterative transmissions of the PUCCH by a MTC terminal;
FIG. 3 is a (second) diagram for illustrating PUCCH conflict due to iterative transmissions of the PUCCH by a MTC terminal;
FIG. 4 is a diagram for illustrating a conflict probability of the PUCCH;
FIG. 5 is a (first) diagram for illustrating that the PUCCH conflict is avoided according to a first approach of an embodiment of the present invention;
FIG. 6 is a (second) diagram for illustrating that the PUCCH conflict is avoided according to a first approach of an embodiment of the present invention;
FIG. 7A is a structural diagram of a base station according to an embodiment of the present invention;
FIG. 7B is a structural diagram of a baseband signal processing unit in the base station according to an embodiment of the present invention;
FIG. 8A is a structural diagram of a mobile station according to an embodiment of the present invention;
FIG. 8B is a structural diagram of a baseband signal processing unit in the mobile station according to an embodiment of the present invention;
FIG. 9 is a flowchart of a transmission method in a base station according to the first approach of an embodiment of the present invention;
FIG. 10 is a (first) diagram for illustrating that the PUCCH conflict is reduced according to a second approach of an embodiment of the present invention;
FIG. 11 is a (second) diagram for illustrating that the PUCCH conflict is reduced according to the second approach of an embodiment of the present invention;
FIG. 12 is a flowchart of a retransmission control method in a mobile station according to the second approach of an embodiment of the present invention;
FIG. 13 is a (first) diagram for illustrating that the PUCCH conflict is avoided according to a third approach of an embodiment of the present invention;
FIG. 14 is a (second) diagram for illustrating that the PUCCH conflict is avoided according to the third approach of an embodiment of the present invention;
FIG. 15 is a flowchart of a transmission method in a base station according to the third approach of an embodiment of the present invention;
FIG. 16 is a flowchart of a retransmission control method in a mobile station according to the third approach of an embodiment of the present invention; and
FIG. 17 is a diagram for illustrating a PUCCH conflict probability and a PDCCH transmission limitation probability according to an embodiment of the present invention.

### EMBODIMENTS OF THE INVENTION

Embodiments of the present invention are described below with reference to the drawings.

In embodiments of the present invention, some approaches for avoiding PUCCH conflict among terminals are described in cases where terminals receiving a PDCCH and a PDSCH in different subframes such as MTC terminals exist. The terminal may be also referred to as a mobile station or user equipment (UE). In descriptions below, the terminal receiving the PDCCH and the PDSCH in different subframes is referred to as a MTC terminal, and the terminal receiving the PDCCH and the PDSCH in the same subframe is referred to as a LTE terminal.

Although an (E)PDCCH (Enhanced Physical Downlink Control Channel), which is an extension of the PDCCH, is sometimes used in a LTE-Advanced system, the PDCCH and the (E)PDCCH are collectively referred to as the PDCCH below. Also, the enhanced coverage mode of the MTC terminal is illustratively described below, but the present invention is not limited to it and can be also applied to the low cost mode. In other words, it can be easily understood that the case where the number of iterations is equal to 1 in the enhanced coverage mode corresponds to the low cost mode.

First, the case where the PUCCH conflict arises among terminals is described in detail.

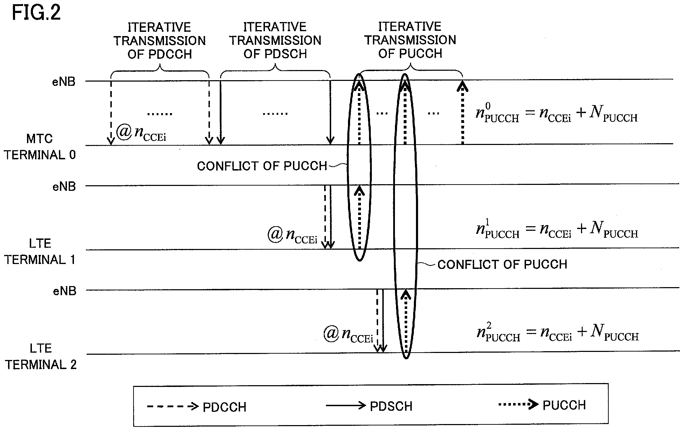

FIG. 2 is a diagram for illustrating the PUCCH conflict due to iterative transmissions of the PUCCH by MTC terminals. As stated above, the PDCCH and the PDSCH are iteratively transmitted to the enhanced coverage mode of MTC terminals so as to expand the coverage of the MTC terminals.

In the LTE system and the LTE-Advanced system, a HARQ (Hybrid ARQ) is used as a retransmission technique. A HARQ feedback including acknowledgement information (ACK/NACK) is transmitted in a PUCCH. The PUCCH is iteratively transmitted corresponding to iterative transmissions of the PDSCH. Note that there is a case where only any one of the PDCCH, the PDSCH and PUCCH is iteratively transmitted. The PUCCH is transmitted after a constant time period (for example, after 4ms) from completion of iterative transmissions of the PDSCH.

In FIG. 2, a PUCCH resource for MTC terminal 0 is derived by n_{PUCCH}⁰=n_{CCEi}+N_{PUCCH}. n_{CCEi} is the first CCE index of the PDCCH corresponding to the PUCCH, and for the MTC terminal 0, CCE index n_{CCEi} for use in iterative transmission of the PDCCH before several frames is used.

On the other hand, a normal LTE terminal also exists in the same coverage and communicates with the same base station (eNB: enhanced Node B) as the MTC terminal. The LTE terminal transmits the PUCCH after a constant time period (for example, 4 ms) from receiving the PDCCH and the PDSCH transmitted in the same frame. The PUCCH resource for LTE terminal 1 is derived by n_{PUCCH}¹=n_{CCEi}+N_{PUCCH}. n_{CCEi} is the first CCE index of the PDCCH corresponding to the PUCCH, and for the LTE terminal 1, the CCE index n_{CCEi} for use in the PDCCH in the subframe before 4 ms in FDD (Frequency Division Duplex) is used, for example. As illustrated in FIG. 2, there is a likelihood that n_{CCEi} of the MTC terminal 0 may be equal to n_{CCEi} of the LTE terminal 1, and in this case, the PUCCH conflict may arise. Similarly, there is a likelihood that the PUCCH conflict with LTE terminal 2 may arise during iterative transmissions of the PUCCH by the MTC terminal 0.

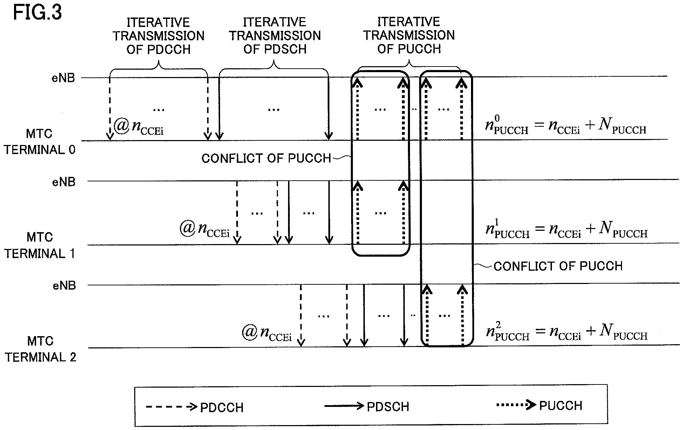

FIG. 3 is a diagram for illustrating the PUCCH conflict due to iterative transmissions of the PUCCH from MTC terminals. In FIG. 3, the PUCCH conflict in the case where MTC terminals iteratively transmit the PUCCH is illustrated. Particularly, the number of PUCCH transmissions by the enhanced coverage mode of MTC terminals increases, and the probability of the PUCCH conflict would be higher than the case in FIG. 2.

In FIGS. 2 and 3, the PUCCH conflict due to iterative transmissions of the PUCCH by the MTC terminal is illustrated, but this PUCCH conflict may arise in not only the case where the PUCCH is iteratively transmitted but also the case where there is a mixture of users having different transmission timings of the PDCCH and the PDSCH.

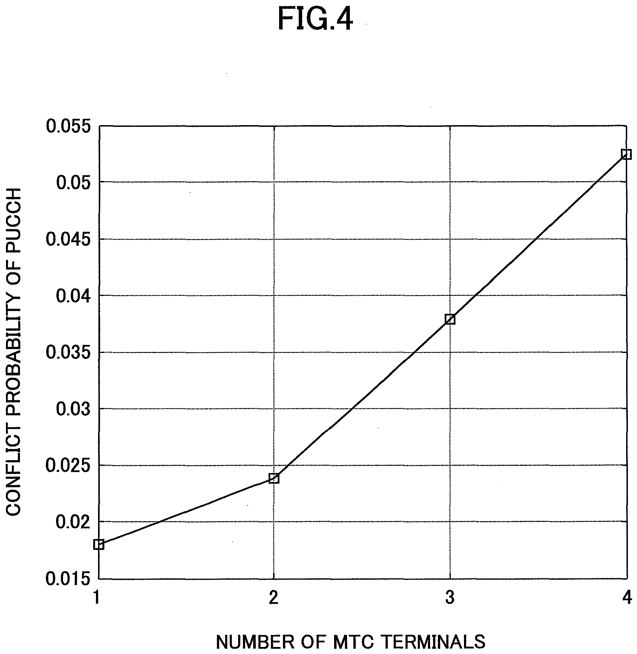

FIG. 4 illustrates a PUCCH conflict probability. FIG. 4 illustrates simulation results in the case where 16 terminals exist in the same coverage and the PDCCH, the PDSCH and the PUCCH are transmitted with the same number of iterations (ten times). The greater the number of MTC terminals is, the higher the PUCCH conflict probability is.

In order to avoid or reduce the PUCCH conflict, three approaches below are used in embodiments of the present invention. Any combination of the three approaches may be applied.

### (1) First Approach

In the first approach, in order to avoid the PUCCH conflict, a PDCCH resource is assigned at a base station to prevent the PUCCH conflict. As stated above, the PUCCH resource is derived from an assignment position (n_{CCEi}) of the PDCCH resource and a start index (N_{PUCCH}) of the PUCCH resource configured by upper layer signaling. In adjustment based on the assignment position (n_{CCEi}) of the PDCCH resource, the base station assigns the PDCCH resource in consideration of previous PDCCH resource assignment information such that the same n_{CCE} cannot be used among PDCCHs using the same subframe for transmitting a HARQ feedback. Alternatively, the PDCCH resource is assigned in consideration of assignment information of reserved PUCCH resources such that the same resource cannot be redundantly assigned in the same subframe for PUCCHs for different terminals. Also, in adjustment based on the start index (N_{PUCCH}) of the PUCCH resource configured by the upper layer signaling, the base station configures the N_{PUCCH} specific to a MTC terminal and assigns a PUCCH resource such that the same resource cannot be redundantly assigned in the same subframe for PUCCHs for different terminals.

### (2) Second Approach

In the second approach, in order to reduce the PUCCH conflict, a MTC terminal performs retransmission determination for a PDSCH, and if the retransmission is not needed, the MTC terminal does not transmit an ACK, and otherwise if the retransmission is needed, the MTC terminal transmits a NACK. In other words, only the NACK of acknowledgement information (ACK/NACK) is transmitted. Since the MTC terminal having better reception environment does not transmit the PUCCH, the PUCCH conflict will be reduced.

### (3) Third Approach

In the third approach, in order to avoid the PUCCH conflict, a base station indicates a PUCCH resource to be used by a MTC terminal explicitly or implicitly. In one embodiment, the base station signals multiple candidates of the PUCCH resource to the terminal beforehand. The base station determines the PUCCH resource to be used by the MTC terminal from the indicated multiple PUCCH resource candidates and transmits an indicator (ARI: ACK Indicator field) for determining the PUCCH resource to indicate explicitly. The MTC terminal receives the indicator for determining the PUCCH resource and transmits the PUCCH in accordance with the received indicator. Also, the base station may indicate the PUCCH resource to be used by the MTC terminal to the MTC terminal in an implicit indication where an indicated offset is added to the above-stated formula (1).

The respective approaches are described in detail below.

### [First Approach]

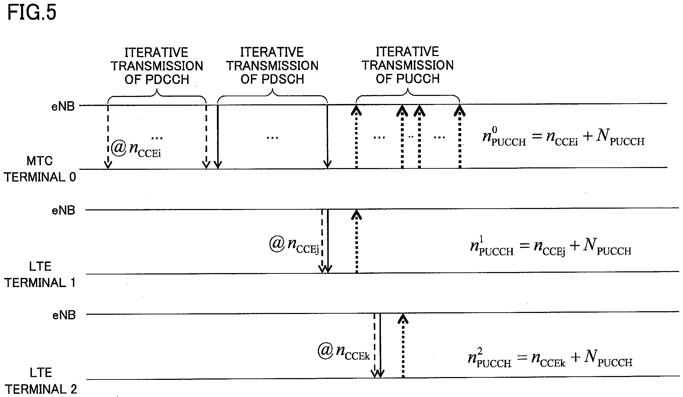

FIG. 5 illustrates that the PUCCH conflict is avoided in accordance with the first approach of an embodiment of the present invention. In order to assign PDCCH and PDSCH resources for a terminal communicating with a base station, the base station recognizes to which resources the PDCCH have been assigned (PDCCH resource assignment information) and as a result, recognizes in which resources the PUCCH will be received (PUCCH resource assignment information).

Accordingly, if the MTC terminal receives the PDSCH and the PDCCH in different subframes, the base station uses the PDCCH resource assignment information or the PUCCH resource assignment information to assign PDCCH resources such that the PUCCH conflict cannot arise. For example, it is assumed that the PDCCH and the PDSCH are assigned to multiple subframes for the MTC terminal and the MTC terminal receives the PUCCH in the multiple subframes. Then, if a LTE terminal communicates, PDCCH resources are assigned for the LTE terminal such that the PUCCH can be transmitted in a resource different from the PUCCH transmitted by the MTC terminal.

For example, in FIG. 5, if the MTC terminal transmits the PUCCH using resources indicated by n_{PUCCH}⁰=n_{CCEi}+N_{PUCCH} in multiple subframes, a PDCCH resource indicated by different n_{CCEj} is assigned for LTE terminal 1 and a PDCCH resource indicated by different n_{CCEk} is assigned for LTE terminal 2 such that the same n_{CCEi} cannot be used in subframes for the MTC terminals to transmit the PUCCH.

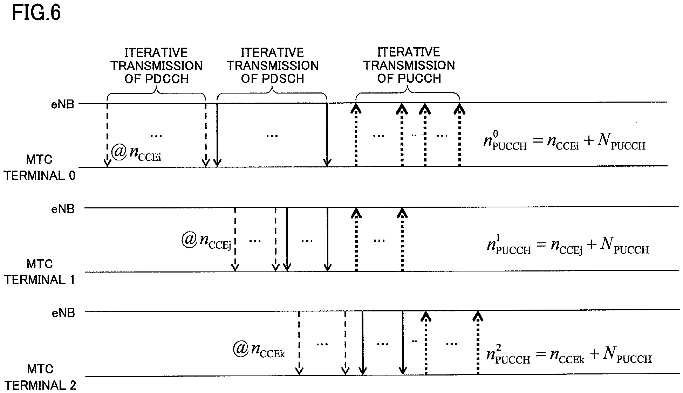

FIG. 6 illustrates that the PUCCH conflict is avoided in the case where multiple MTC terminals are communicating. Also in this case, as in the description in conjunction with FIG. 5, a base station uses the PDCCH resource assignment information or the PUCCH resource assignment information to assign PDCCH resources such that the PUCCH conflict cannot arise.

For example, in FIG. 6, if MTC terminal 0 transmits the PUCCH using resources indicated by n_{PUCCH}⁰=n_{CCEi}+N_{PUCCH} in multiple frames, a PDCCH resource indicated by n_{PUCCH}¹=n_{CCEj}+N_{PUCCH} with different n_{CCEj} is assigned for MTC terminal 1 and a PDCCH resource indicated by n_{PUCCH}²=n_{CCEk}+N_{PUCCH} with different n_{CCEk} is assigned for MTC terminal 2 such that the same n_{CCEi} cannot be used in subframes for the MTC terminal 0 to transmit the PUCCH.

Also, if the MTC terminal transmits the PUCCH using resources indicated by n_{PDCCH}⁰=n_{CCEi}+N_{PUCCH} in multiple subframes, a PDCCH resource indicated by different N_{PUCCH} is assigned for a LTE terminal such that the same N_{PUCCH} cannot be used in subframes for the MTC terminal to transmit the PUCCH. The N_{PUCCH} may be set to a value specific to the MTC terminal. Also, for the PUCCH conflict among MTC terminals, for example, values (N_{PUCCH}^{LowcostMCE}, N_{PUCCH}^{enhancedcoverageMCE}) specific to a mode type may be set to N_{PUCCH}.

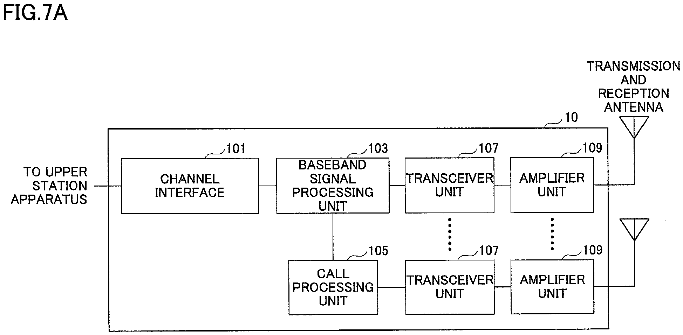

FIG. 7A is a structural diagram of a base station (eNB) 10 according to an embodiment of the present invention. The base station 10 has a channel interface 101, a baseband signal processing unit 103, a call processing unit 105, a transceiver unit 107 and an amplifier unit 109.

Data transmitted from the base station 10 to a mobile station in a downlink is supplied from an upper station device to the baseband signal processing unit 103 via the channel interface 101.

The baseband signal processing unit 103 performs a PDCP (Packet Data Convergence Protocol) layer operation, data segmentation and concatenation, a RLC (Radio Link Control) layer transmission operation such as a transmission operation for RLC retransmission control, a MAC (Medium Access Control) retransmission control such as a HARQ (Hybrid Automatic Repeat request) transmission operation, scheduling, transmission format selection, channel encoding, an IFFT (Inverse Fast Fourier Transform) operation and a precoding operation. Also, transmission operations such as channel encoding and Inverse Fast Fourier Transform are performed on PDCCH signals serving as a downlink control channel.

The call processing unit 105 performs call operations such as configuring or releasing a communication channel, state management for the base station 10 and radio resource management.

The transceiver unit 107 performs frequency conversion on a baseband signal supplied from the baseband signal processing unit 103 into a radio frequency band. The amplifier unit 109 amplifies the frequency-converted transmission signal and supplies it to a transmission and reception antenna. If multiple transmission and reception antennas are used, the multiple transceiver units 107 and amplifier units 109 may be provided.

Meanwhile, for a signal transmitted from the mobile station to the base station 10 in an uplink, a radio frequency signal received at the transmission and reception antenna is amplified at the amplifier unit 109 and frequency-converted at the transceiver unit 107 into a baseband signal, which is supplied to the baseband signal processing unit 103.

The baseband signal processing unit 103 performs a FFT operation, an IDFT operation, error correction decoding, a reception operation for MAC retransmission control, a RLC layer reception operation and a PDCP layer reception operation on data included in the baseband signal received in the uplink. The decoded signal is forwarded to the upper station device via the channel interface 101.

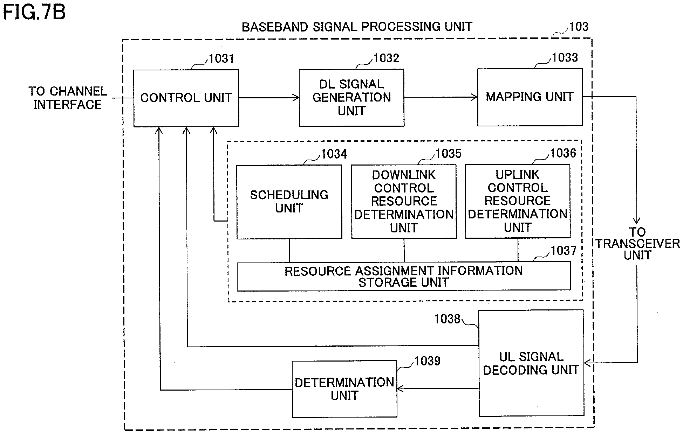

FIG. 7B is a structural diagram of the baseband signal processing unit 103 in the base station 10 according to an embodiment of the present invention. The baseband signal processing unit 103 has a control unit 1031, a downlink (DL) signal generation unit 1032, a mapping unit 1033, a scheduling unit 1034, a downlink control resource determination unit 1035, an uplink control resource determination unit 1036, a resource assignment information storage unit 1037, an uplink (UL) signal decoding unit 1038 and a determination unit 1039.

The control unit 1031 totally manages the baseband signal processing unit 103. For a signal transmitted to a mobile station in a downlink, data incoming from the channel interface 101 is supplied to the DL signal generation unit 1032. For a signal received from the mobile station in an uplink, data decoded at the UL signal decoding unit 1038 is supplied to the channel interface 101. Also, the control unit 1031 performs retransmission operations such as HARQ.

The DL signal generation unit 1032 generates a signal for transmission to the mobile station. The signal for transmission to the mobile station includes data and control information. The data is mainly transmitted in a PDSCH, and assignment information required to receive the PDSCH is transmitted in a PDCCH.

The mapping unit 1033 maps data transmitted in the PDSCH and control information transmitted in the PDCCH into resources determined by the scheduling unit 1034 and the downlink control resource determination unit 1035.

The scheduling unit 1034 schedules data to transmit to the mobile station in the PDSCH. For example, the scheduling unit 1034 schedules data to transmit in the PDSCH in consideration of acknowledgement information, a channel estimation value, channel quality and so on.

The downlink control resource determination unit 1035 assigns resources for the PDCCH. Resources that can be assigned for the PDCCH are predefined, and the downlink control resource determination unit 1035 assigns a PDCCH resource from the predefined resources.

The uplink control resource determination unit 1036 assigns resources for the PUCCH. As stated above, the PUCCH resources are derived from formula (1) below.

n_{PUCCH}=n_{CCE}+N_{PUCCH} (1)

The resource assignment information storage unit 1037 stores resource assignment information for various channels. Specifically, the resource assignment information storage unit 1037 stores the resource assignment information for the PDSCH scheduled by the scheduling unit 1034 and the resource assignment information of the PDCCH determined by the downlink control resource determination unit 1035. Also, the resource assignment information storage unit 1037 stores the resource assignment information for the PUCCH determined by the uplink control resource determination unit 1036.

The UL signal decoding unit 1038 decodes a signal received from the mobile station in an uplink. Data received in the PUSCH (Physical Uplink Shared Channel) is supplied to the control unit 1031 to be provided to the channel interface 101, and acknowledgement information (ACK/NACK) received in the PUCCH is also supplied to the control unit 1031 for retransmission operations such as HARQ.

The determination unit 1039 performs retransmission determination for signals received in the PUSCH. If the PUSCH is successfully received, the acknowledgement information (ACK/NACK) is generated for indicating that retransmission is not needed, and otherwise if the PUSCH is unsuccessfully received, the acknowledgement information (NACK) is generated for indicating that retransmission is needed.

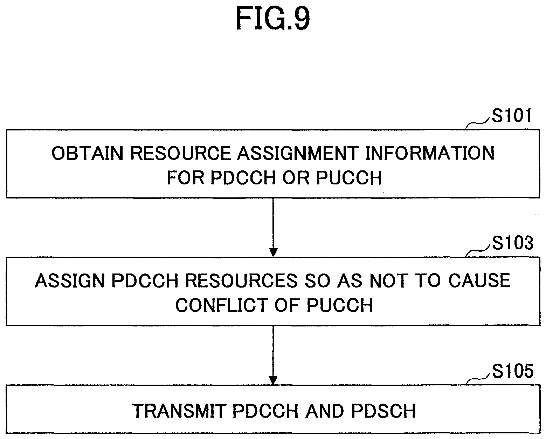

Operations of the respective function units in the base station 10 in the first approach of an embodiment of the present invention are described below with reference to FIG. 9.

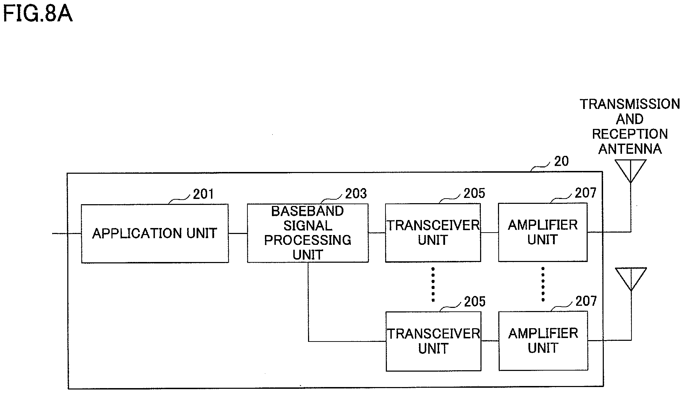

FIG. 8A is a structural diagram of the mobile station (MTC terminal and LTE terminal) 20 according to an embodiment of the present invention. The mobile station 20 has an application unit 201, a baseband signal processing unit 203, a transceiver unit 205 and an amplifier unit 207.

For downlink data, a radio frequency signal received at the transmission and reception antenna is amplified at the amplifier unit 207 and frequency-converted into a baseband signal at the transceiver unit 205. The baseband signal processing unit 203 performs reception operations such as a FFT operation, error correction decoding and retransmission control for the baseband signal. The downlink data is forwarded to the application unit 201. The application unit 201 performs operations for upper layers from the physical layer and the MAC layer.

Meanwhile, uplink data is supplied from the application unit 201 to the baseband signal processing unit 203. The baseband signal processing unit 203 performs transmission operations for retransmission operations, channel encoding, a DFT operation and an IFFT operation. The transceiver unit 205 converts a baseband signal supplied from the baseband signal processing unit 203 into a radio frequency band, which is then amplified at the amplifier unit 207 and transmitted from the transmission and reception antenna.

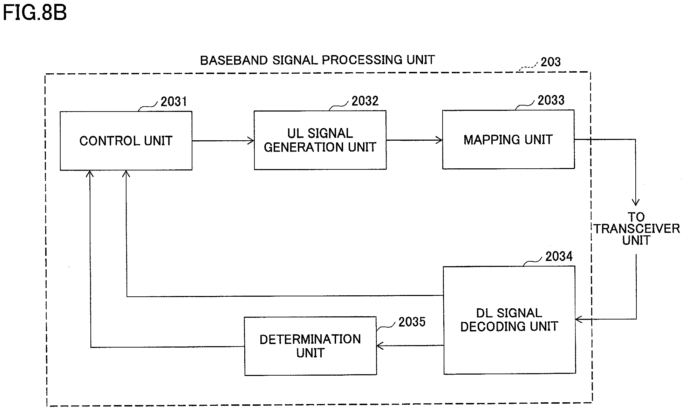

FIG. 8B is a structural diagram of the baseband signal processing unit 203 in the mobile station 20 according to an embodiment of the present invention. The baseband signal processing unit 203 has a control unit 2031, an uplink (UL) signal generation unit 2032, a mapping unit 2033, a downlink (DL) signal decoding unit 2034 and a determination unit 2035.

The control unit 2031 totally manages the baseband signal processing unit 203. For a signal transmitted to a base station in an uplink, data incoming from the application unit 201 is supplied to the UL signal generation unit 2032. For a signal received from the base station in a downlink, data resulting in reception operations at the DL signal decoding unit 2034 is supplied to the application unit 201. Also, the control unit 2031 performs retransmission operations such as HARQ.

The UL signal generation unit 2032 generates a signal for transmission to a base station. The signal for transmission to the base station includes data and control information, and the data is mainly transmitted in a PUSCH. Also, acknowledgement information (ACK/NACK) of the data received from the base station in the PDSCH is transmitted in a PUCCH.

The mapping unit 2033 assigns the data to transmit in the PUSCH to a resource determined by the scheduling unit 1034 in the base station. Also, the PUCCH resource for assigning the acknowledgement information (ACK/NACK) is derived from the corresponding PDCCH resource in accordance with formula (1) below.

n_{PUCCH}=n_{CCE}+N_{PUCCH} (1)

The DL signal decoding unit 2034 decodes a signal received from the base station in the downlink, and the data received in the PDSCH is supplied to the control unit 2031 to be provided to the application unit 201.

The determination unit 2035 performs retransmission determination for the signal received in the PDSCH. If the PDSCH is successfully received, the determination unit 2035 generates acknowledgement information (ACK) indicating that no retransmission is needed, and otherwise if the PUSCH is unsuccessfully received, the determination unit 2035 generates acknowledgement information (NACK) indicating that retransmission is needed.

According to the first approach in an embodiment of the present invention, the base station assigns a PDCCH resource such that the PUCCH conflict cannot arise, that is, the base station sets n_{CCE} and N_{PUCCH} in formula (1) such that the PUCCH conflict cannot arise, and accordingly no special operation other than the above operations is needed for the function units in the mobile station 20.

FIG. 9 is a flowchart of a transmission method in the base station 10 according to the first approach of an embodiment of the present invention.

The resource assignment information storage unit 1037 stores PDCCH resource assignment information or PUCCH resource assignment information. The PDCCH resource assignment information may be n_{CCE} in the above formula (1) or other values indicative of the PDCCH resource assignment position. Also, the PUCCH resource assignment information may be N_{PUCCH} and/or N_{PUCCH} in the above formula (1) or other values indicative of the PUCCH resource assignment position.

The downlink control resource determination unit 1035 obtains the PDCCH or PUCCH resource assignment information from the resource assignment information storage unit 1037 (step S101). For example, if data is transmitted to a mobile station in a certain subframe, the downlink control resource determination unit 1035 determines whether a MTC terminal transmits a PUCCH in the PUCCH corresponding to the subframe, and if the MTC terminal transmits the PUCCH, the PUCCH resource assignment information for the MTC terminal is obtained.

The downlink control resource determination unit 1035 assigns a PDCCH resource with reference to the obtained resource assignment information such that the PUCCH conflict cannot arise (step S103). For example, if the MTC terminal transmits the PUCCH in the PUCCH corresponding to the certain subframe, the PDCCH resource is assigned such that the PUCCH resource assignment position cannot overlap.

The PDCCH and the PUSCH are mapped into a resource block at the mapping unit 1033 and transmitted to the mobile station (step S105).

In this manner, the PUCCH conflict among terminals can be avoided.

### [Second Approach]

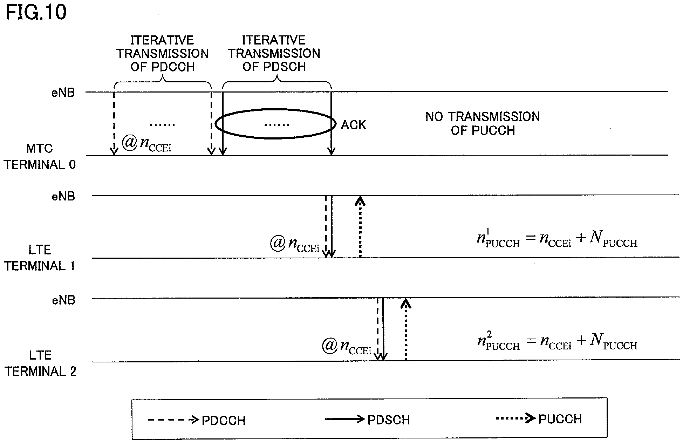

FIG. 10 illustrates that the PUCCH conflict is reduced in accordance with the second approach of an embodiment of the present invention. LTE terminals and MTC terminals use a retransmission technique to improve reception quality. In the LTE system and the LTE-Advanced system, HARQ is used as the retransmission technique. In the HARQ, ACK and NACK are defined as acknowledgement information indicative of results of retransmission determination, and according to the second approach, the LTE terminals transmit the acknowledgement information (ACK/NACK) indicative of results of PDSCH retransmission determination. On the other hand, the MTC terminals transmit only the NACK of the acknowledgement information (ACK/NACK).

In FIG. 10, it is assumed that MTC terminal 0 in the enhanced coverage mode resides at a position having good reception environment. In this case, the MTC terminal 0 will successfully receive iteratively transmitted PDSCHs and accordingly does not transmit the PUCCH(ACK).

The MTC terminal 0 does not transmit the PUCCH, and thus when LTE terminal 1 transmits the PUCCH in a resource indicated by n_{PUCCH}¹=n_{CCEi}+N_{PUCCH}, the PUCCH conflict does not arise. Similarly, when LTE terminal 2 transmits the PUCCH in a resource indicated by N_{PUCCH}²=n_{CCEi}+N_{PUCCH}, the PUCCH conflict does not also arise. However, if the MTC terminal 0 is in poor reception environment and is likely to transmit NACK, it is impossible to avoid the PUCCH conflict completely.

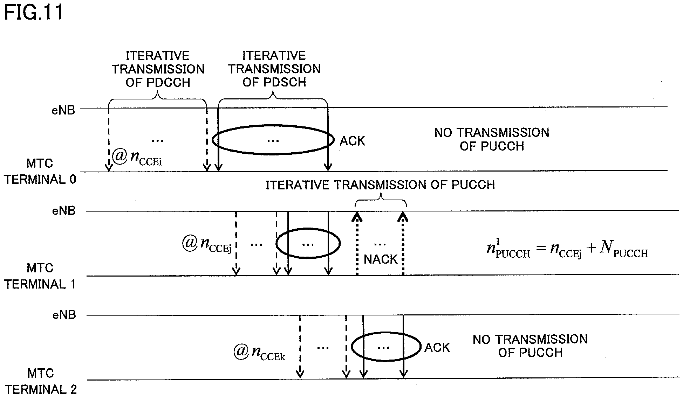

FIG. 11 illustrates that the PUCCH conflict is reduced in the case where multiple MTC terminals communicate. Also in this case, as described in conjunction with FIG. 10, the MTC terminal transmits only NACK of the acknowledgement information (ACK/NACK). For example, in FIG. 11, it is assumed that MTC terminal 0 and MTC terminal 2 reside at positions having good reception environment whereas MTC terminal 1 resides at a position having poor reception environment. In this case, MTC terminals 0 and 2 in the enhanced coverage mode do not transmit the PUCCH, and accordingly when the MTC terminal 1 uses a resource indicated by n_{PUCCH}¹=n_{CCEi}+N_{PUCCH} to transmit the PUCCH, the PUCCH conflict does not arise.

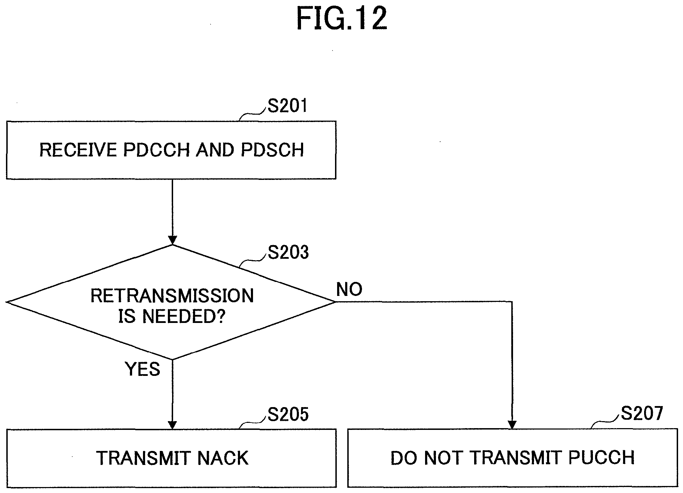

The base station 10 and the mobile station 20 according to the second approach of an embodiment of the present invention are arranged similar to FIGS. 7A, 7B, 8A and 8B. Operations in function units in the base station 10 and the mobile station 20 according to the second approach of an embodiment of the present invention are described below with reference to FIG. 12.

FIG. 12 is a flowchart of a retransmission control method in the mobile station 20 according to the second approach of an embodiment of the present invention.

The DL signal decoding unit 2034 decodes control information indicated in the PDCCH and obtains assignment information. Also, the DL signal decoding unit 2034 decodes data transmitted in the PDSCH based on the assignment information indicated in the PDCCH (step S201).

The determination unit 2035 determines whether retransmission for the PDSCH is needed (step S203). If the PDSCH is unsuccessfully received, the determination unit 2035 generates acknowledgement information (NACK) indicating that the retransmission is needed.

If the retransmission is needed, operations such as channel encoding and modulation are performed on the acknowledgement information (NACK) indicating that the retransmission is needed, which is transmitted in the PUCCH by using a resource derived from formula (1) below.

n_{PUCCH}=n_{CCE}+N_{PUCCH} (1)

Note that if the PDSCH is successfully received, the acknowledgement information (ACK) indicating that the retransmission is not needed is not transmitted in the PUCCH (step S207). Accordingly, the determination unit 2035 may terminate the operation without generating the acknowledgement information (ACK). According to the second approach of an embodiment of the present invention, since the mobile station 20 does not transmit the ACK, the base station 10 cannot determine which the mobile station is in a no-response state (DTX) or a reception successful state (ACK) in the retransmission process. Accordingly, if no PUCCH response is received, the control unit 1031 in the base station 10 for controlling retransmission to the mobile station considers that the mobile station 20 has successfully received the PDSCH (considering as ACK).

Here, if the PUSCH is scheduled for a MTC terminal in a subframe for transmitting the PUCCH and UCI (Uplink Control Information) is transmitted in the PUSCH, it may be assumed that the MTC terminal transmits the acknowledgement information (ACK) indicating that the retransmission is not needed, or it may be assumed that the MTC terminal may transmit only the acknowledgement information (NACK) indicating that the retransmission is needed as the same operation as the PUCCH.

In this manner, the PUCCH conflict among terminals can be reduced.

### [Third Approach]

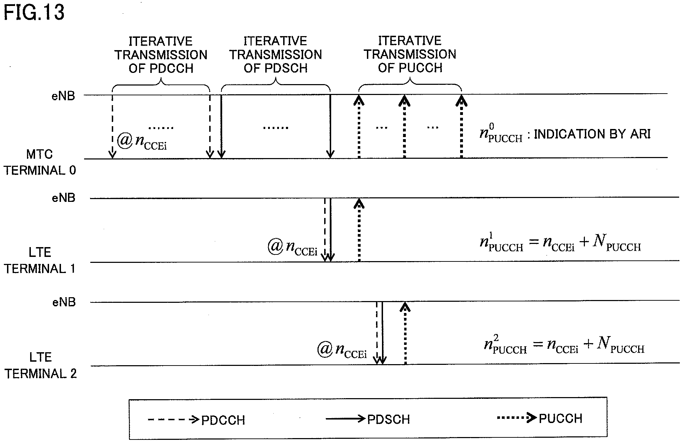

FIG. 13 illustrates that the PUCCH conflict is avoided in accordance with the third approach of an embodiment of the present invention.

A base station indicates PUCCH resources or multiple candidates of PUCCH resources to be used for a terminal to the terminal by upper layer signaling (for example, RRC (Radio Resource Control) signaling) beforehand. Since the base station assigns the PDCCH and PDSCH resources for the terminal communicating with the base station, the base station recognizes to which resources the PDCCH has been assigned (PDCCH resource assignment information), and as a result, the base station recognizes in which resource the PUCCH will be received (PUCCH resource assignment information).

If there is a likelihood that the PUCCH conflict may arise due to communication by MTC terminals, the base station indicates a PUCCH resource to be used by the MTC terminal to the MTC terminal based on the PDCCH and PUCCH resource assignment information. This indication may be transmitted in RRC signaling, and specific PUCCH resources may be indicated to the respective MTC terminals. Alternatively, the specific PUCCH resources may be indicated in a certain field in DCI (Downlink Control Information). This field may be newly defined, or some existing field may be used. Upon receiving the indication, the MTC terminal transmits the PUCCH in the indicated resource.

Alternatively, the base station determines a PUCCH resource to be used by the MTC terminal from PUCCH resource candidates signaled beforehand and transmits an indicator (ARI) for determining the PUCCH resource to the MTC terminal. The ARI transmitted to the MTC terminal indicates which of the PUCCH resource candidates signaled beforehand is to be used.

For example, if there are four patterns of PUCCH resource candidates, information indicative of which of the four patterns is to be used can be defined in two bits. The two bit information may be indicated to the MTC terminal by using the ARI (ACK Indicator field) in DCI (Downlink Control Information) defined in an existing specification. It is assumed that the MTC terminal knows in which DCI the ARI is indicated beforehand. For example, the ARI may be indicated to the MTC terminal by using a part of DCI for transmitting assignment information (DL assignment).

The MTC terminal receives the indicator for determining the PUCCH resource and transmits the PUCCH in accordance with the received indicator.

For example, in FIG. 13, if MTC terminal 0 in the enhanced coverage mode transmits the PUCCH in multiple subframes, the base station indicates to the MTC terminal 0 a specific resource for the PUCCH or the ARI indicating which of the PUCCH resource candidates signaled beforehand is to be used such that the PUCCH conflict cannot arise. The MTC terminal 0 transmits the PUCCH by using the indicated specific resource instead of the PUCCH resource derived from formula (1) or uses the information signaled by the ARI to determine and transmit the PUCCH resource.

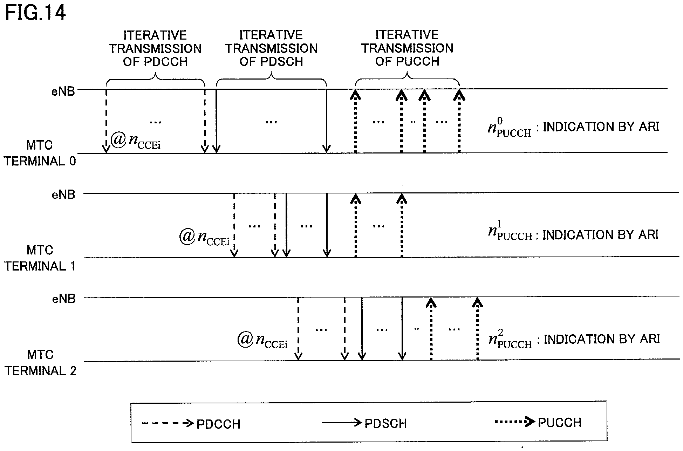

FIG. 14 illustrates that the PUCCH conflict is avoided in the case where multiple MTC terminals communicate. Also in this case, as described in conjunction with FIG. 13, a base station indicates to the MTC terminal a PUCC resource determined based on PDCCH and PUCCH resource assignment information such that the PUCCH conflict cannot arise or indicates to the MTC terminal an ARI indicating which of PUCCH resource candidates signaled beforehand is to be used. As a result, even if the multiple MTC terminals communicate simultaneously, the PUCCH conflict can be avoided.

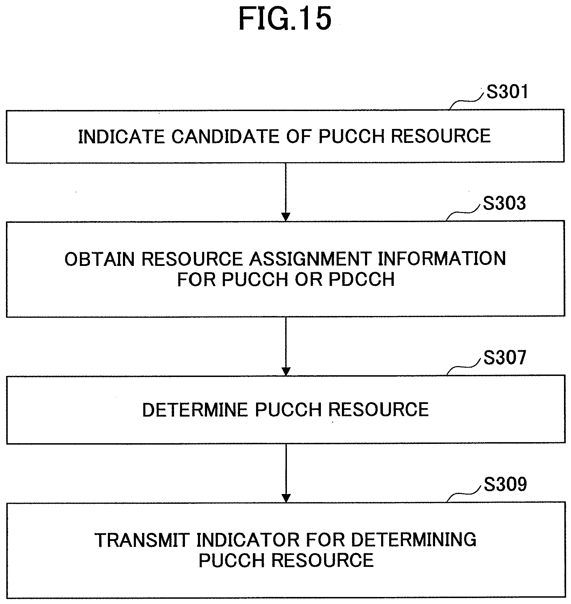

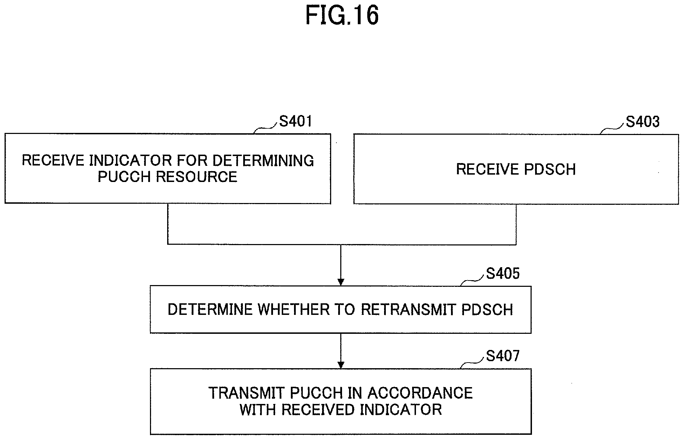

The base station 10 and the mobile station 20 according to the third approach of an embodiment of the present invention are arranged similar to FIGS. 7A, 7B, 8A and 8B. Operations in respective functional units in the base station 10 and the mobile station 20 according to the third approach of an embodiment of the present invention are described below with reference to FIGS. 15 and 16.

FIG. 15 is a flowchart of a transmission method in the base station 10 according to the third approach of an embodiment of the present invention.

The base station 10 indicates multiple candidates of PUCCH resources to a terminal by upper layer signaling beforehand (step S301).

The resource assignment information storage unit 1037 stores PDCCH resource assignment information or PUCCH resource assignment information. The PDCCH resource assignment information may be n_{CCE} in the above formula (1) or other values indicating the PDCCH resource assignment position. Also, the PUCCH resource assignment information may be N_{PUCCH} in the above formula (1) or other values indicating the PUCCH resource assignment position.

The downlink control resource determination unit 1035 obtains the PDCCH or PUCCH resource assignment information from the resource assignment information storage unit 1037 (step S303). For example, if data is transmitted to the MTC terminal in multiple subframes, the downlink control resource determination unit 1035 determines whether other terminals transmit the PUCCH in the respective PUCCHs corresponding to these multiple subframes, and if the terminals transmit the PUCCH, obtains the PUCCH resource assignment information.

The downlink control resource determination unit 1035 determines whether the PUCCH conflict involved in assigning the PDCCH to the MTC terminal can arise with reference to the obtained resource assignment information. The downlink control resource determination unit 1035 determines the PUCCH resource for the MTC terminal such that the PUCCH conflict cannot arise (step S307). The determined PUCCH resource is indicated to the MTC terminal, or an indicator to indicate the determined PUCCH resource to the MTC terminal is generated as control information at the DL signal generation unit 1032, which is transmitted to the MTC terminal in the PDCCH (step S309). As stated above, the indicator to determine the PUCCH resource is a value indicating which of PUCCH resource candidates signaled by upper layer signaling beforehand is to be used.

FIG. 16 is a flowchart of a retransmission control method in the mobile station 20 according to the third approach of an embodiment of the present invention.

It is assumed that the mobile station 20 has received the multiple PUCCH resource candidates by upper layer signaling beforehand. The DL signal decoding unit 2034 receives and decodes an indicator for determining which of the PUCCH resource candidates is to be used, or the PUCCH resource to be used is indicated from the base station (step S401).

The DL signal decoding unit 2034 receives data transmitted in the PDSCH from the base station (step S403) .

Here, there is no particular limitation on the order of step S401 and step S403. Step S403 may be performed after step S401, step S403 may be performed before step S401, and step S401 and step S403 may be simultaneously performed (in the same subframe).

The determination unit 2035 determines whether retransmission is needed for the PDSCH (step S405). If the PDSCH is unsuccessfully received, the determination unit 2035 generates acknowledgement information (NACK) indicating that the retransmission is needed. If the PDSCH is successfully received, the determination unit 2035 generates acknowledgement information (ACK) indicating that the retransmission is not needed.

For the acknowledgement information (ACK/NACK), the PUCCH resource indicated by the mapping unit 2033 is assigned, or the PUCCH resource is assigned at the mapping unit 2033 in accordance with the received indicator, which is transmitted in the PUCCH.

In this manner, the PUCCH conflict among terminals can be avoided.

In the above description, the ARI is used to explicitly indicate to the mobile station which of the PUCCH resource candidates indicated by upper layer signaling beforehand is to be used, but the base station may indicate an offset value to shift the PUCCH resource in any of indication manners as stated below (implicit indication). In this case, formula (1) indicative of the PUCCH resource may be represented as formula (2) below.

n_{PUCCH}=n_{CCE}+N_{PUCCH}+Δ offset (2)

Δ_{offset} to shift the PUCCH resource is determined by the base station to be a value corresponding to the PUCCH resource to be used by the MTC terminal. The offset value Δ_{offset} may be set to be i) a fixed value, ii) a value configured in RRC, iii) DCI or iv) a PCFICH (Physical Control Format Indicator Channel) in a PDSCH subframe.

In other words, the Δ_{offset} value may be set to a fixed value, for example, the maximum CCE. Also, the Δ_{offset} value may be indicated from the base station in RRC. Also, the Δ_{offset} value may be indicated in a field (such as an ARI) in DCI from the base station. In this case, the relationship between the indicated bit value of the field and Δ_{offset} is separately signaled or incorporated in the user terminal beforehand. The field may be newly defined, or some existing field may be used. Furthermore, the Δ_{offset} value may be configured based on the PCFICH value in the PDSCH subframe. The PCFICH is to indicate the number of PDCCH symbols occupied in the subframe. The Δ_{offset} value may be configured based on the number of CFIs (Control Format Indicators) in the PDSCH subframe derived based on the PCFICH value.

The mobile station transmits the PUCCH in a resource derived from formula (2). Note that if the offset value is used, it is unnecessary to indicate multiple PUCCH resource candidates to the terminal beforehand.

Also, the indicator for determining the PUCCH resource may use not the ARI in the DCI but other information items. For example, a new bit may be defined in some existing or new DCIs. By defining the new bit, the number of PUCCH candidates can be flexibly defined.

Besides, a two-bit TPC (Transmit Power Control) field may be used as the indicator for determining the PUCCH resource. In this case, the enhanced coverage mode of MTC terminals cannot control transmission power based on a TPC command. Thus, it may be assumed that the user terminal performs transmission at the maximum transmission power, or the transmission power may be determined by combining with closed-loop control type of transmission power control by interpreting a correction value due to the TPC command as 0 dB.

Also, a two-bit RV (Redundancy Version) field may be used as the indicator for determining the PUCCH resource. The RV bit is used to determine a redundant bit pattern at retransmission. In this case, it may be assumed that the same RV pattern is always used for the enhanced coverage mode of MTC terminals. Also, it may be assumed that the RV pattern is switched in a predefined order (for example, RV0 → RV1 → RV2 → RV3).

Also, a part of a HPN (HARQ Process Number) field indicative of a retransmission process number may be used as the indicator for determining the PUCCH resource. In this case, the maximum process number of retransmissions is limited by using the number of bits in the HPN field as the indicator.

Furthermore, a combination of the TPC field, the RV field and the HPN field as stated above may be used as the indicator for determining the PUCCH resource.

### [Effect of Embodiments of Present Invention]

As stated above, according to embodiments of the present invention, if the PDSCH and the PDCCH for indicating assignment information required to receive the PDSCH are transmitted in different subframes, the PUCCH conflict among terminals can be avoided or reduced.

According to the first approach, the base station assigns a PDSCH resource such that conflict cannot arise at a base station, and accordingly the PUCCH conflict can be totally avoided. Also, the avoidance can be achieved by resource assignment at the base station, and no effect on the terminal is provided.

On the other hand, the PDCCH resource assignment becomes complicated, and there is an increasing probability that the PDCCH cannot be transmitted.

According to the second approach, a mobile station does not transmit ACK in the PUCCH, which does not provide any effect on the PDCCH resource assignment at the base station. Also, it is possible to prevent an increase in the probability that the PDCCH cannot be transmitted.

On the other hand, the PUCCH conflict cannot be totally avoided, and the base station cannot determine whether DTX or ACK occurs.

According to the third approach, no effect on the PDCCH resource assignment for existing LTE terminals by the base station is provided. Also, it is possible to prevent an increase in the probability that the PDCCH cannot be transmitted. Furthermore, the PUCCH conflict can be avoided.

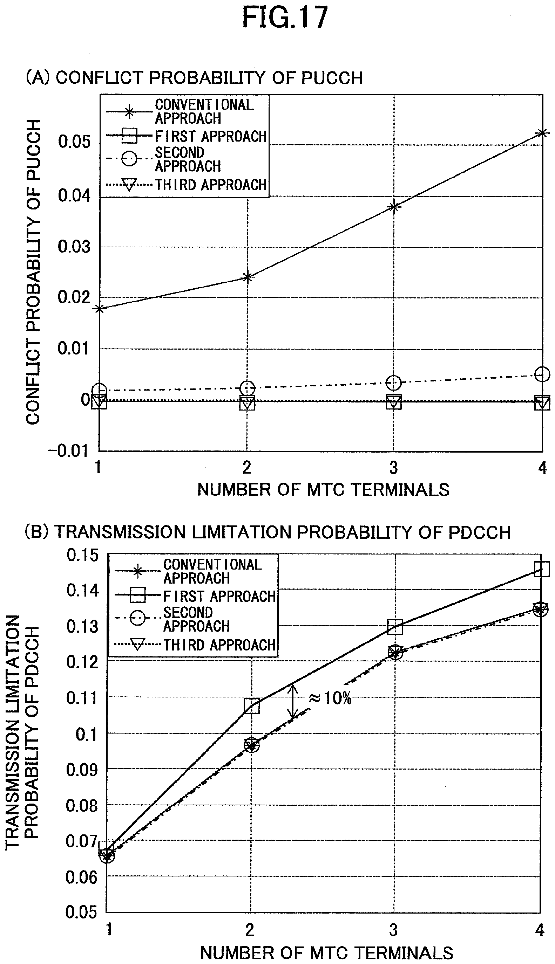

FIG. 17 illustrates a PUCCH conflict probability and a PDCCH transmission limitation probability (the probability that the PDCCH cannot be transmitted) according to an embodiment of the present invention.

A simulation result in FIG. 17 is found under the same condition as that in FIG. 4. As illustrated in FIG. 4, according to conventional manners, as the number of MTC terminals is greater, the PDCCH conflict probability is higher. On the other hand, according to the first and third approaches of embodiments of the present invention, even if the number of MTC terminals increases, the PUCCH conflict probability will be 0. According to the second approach, the PUCCH conflict probability cannot be 0, but the PUCCH conflict probability can be reduced compared to the conventional manners.

Also, in the conventional manners, as the number of MTC terminals is greater, the PDCCH transmission limitation probability is higher. On the other hand, according to the first approach of an embodiment of the present invention, the PDCCH transmission limitation probability is higher by about 10% compared to the conventional manners. According to the second and third manners, it is possible to prevent an increase in the PDCCH transmission limitation probability, which is substantially similar to the conventional manners.

For illustrative convenience, the base station and the mobile station according to embodiments of the present invention are described by using functional block diagrams, but the base station and the mobile station according to embodiments of the present invention may be implemented in hardware, software or combinations thereof. Also, respective functional units may be used in combinations as needed. Also, the method according to embodiments of the present invention may be implemented in an order different from the order as illustrated in embodiments.

Some approaches for avoiding or reducing the PUCCH conflict among terminals have been described in cases where the PDSCH and the PDCCH for indicating assignment information required to receive the PDSCH are transmitted in different subframes, but the present invention is not limited to the above embodiments, and various modifications and applications can be made within the scope of claims.

This international patent application claims priority based on Japanese Priority Applications No. 2014-016189 filed on January 30, 2014 and No. 2014-059259 filed on March 20, 2014, the entire contents of which are hereby incorporated by reference.

### LIST OF REFERENCE SYMBOLS

- 10:: base station
- 101:: channel interface
- 103:: baseband signal processing unit
- 105:: call processing unit
- 107:: transceiver unit
- 109:: amplifier unit
- 1031:: control unit
- 1032:: DL signal generation unit
- 1033:: mapping unit
- 1034:: scheduling unit
- 1035:: downlink control resource determination unit
- 1036:: uplink control resource determination unit
- 1037:: resource assignment information storage unit
- 1038:: UL signal decoding unit
- 1039:: determination unit
- 20:: mobile station
- 201:: application unit
- 203:: baseband signal processing unit
- 205:: transceiver unit
- 207:: amplifier unit
- 2031:: control unit
- 2032:: UL signal generation unit
- 2033:: mapping unit
- 2034:: DL signal decoding unit
- 2035:: determination unit

## Claims

1. A base station for transmitting a physical downlink shared channel and a physical downlink control channel in different subframes, wherein the physical downlink control channel indicates assignment information required to receive the physical downlink shared channel, comprising:
a resource assignment information storage unit configured to store resource assignment information for a physical uplink control channel or resource assignment information for a physical downlink control channel;
a resource assignment unit configured to assign a resource for the physical downlink control channel with reference to the resource assignment information storage unit such that no conflict arises among physical uplink control channels from multiple mobile stations; and
a transmission unit configured to transmit the physical downlink control channel and the physical downlink shared channel.

2. A transmission method in a base station for transmitting a physical downlink shared channel and a physical downlink control channel in different subframes, wherein the physical downlink control channel indicates assignment information required to receive the physical downlink shared channel, comprising:
assigning a resource for the physical downlink control channel with reference to resource assignment information for a physical uplink control channel or resource assignment information for a physical downlink control channel such that no conflict arises among physical uplink control channels from multiple mobile stations; and
transmitting the physical downlink control channel and the physical downlink shared channel.

3. A mobile station for receiving a physical downlink shared channel and a physical downlink control channel in different subframes, wherein the physical downlink control channel indicates assignment information required to receive the physical downlink shared channel, comprising:
a determination unit configured to perform retransmission determination for the physical downlink shared channel; and
a transmission unit configured to refrain from transmitting a physical uplink control channel if the physical downlink shared channel does not have to be retransmitted, and transmit acknowledgement information for requesting retransmission in the physical uplink control channel if the physical downlink shared channel has to be retransmitted.

4. A retransmission control method in a mobile station for receiving a physical downlink shared channel and a physical downlink control channel in different subframes, wherein the physical downlink control channel indicates assignment information required to receive the physical downlink shared channel, comprising:
performing retransmission determination for the physical downlink shared channel; and
refraining from transmitting a physical uplink control channel if the physical downlink shared channel does not have to be retransmitted, and transmitting acknowledgement information for requesting retransmission in the physical uplink control channel if the physical downlink shared channel has to be retransmitted.

5. A base station for transmitting a physical downlink shared channel and a physical downlink control channel in different subframes, wherein the physical downlink control channel indicates assignment information required to receive the physical downlink shared channel, comprising:
a resource assignment information storage unit configured to store resource assignment information for a physical uplink control channel or resource assignment information for a physical downlink control channel;
a resource assignment unit configured to determine a resource for a physical uplink control channel with reference to the resource assignment information storage unit; and
a transmission unit configured to transmit an indicator for determining the resource to be used by a mobile station for the physical uplink control channel.

6. The base station as claimed in claim 5, wherein the transmission unit transmits the indicator for determining the resource to be used by the mobile station for the physical uplink control channel from resource candidates of the physical uplink control channel indicated beforehand.

7. A transmission method in a base station for transmitting a physical downlink shared channel and a physical downlink control channel in different subframes, wherein the physical downlink control channel indicates assignment information required to receive the physical downlink shared channel, comprising:
determining a resource for a physical uplink control channel with reference to resource assignment information for a physical uplink control channel or resource assignment information for a physical downlink control channel; and
transmitting an indicator for determining the resource to be used by a mobile station for the physical uplink control channel.

8. A mobile station for receiving a physical downlink shared channel and a physical downlink control channel in different subframes, wherein the physical downlink control channel indicates assignment information required to receive the physical downlink shared channel, comprising:
a reception unit configured to receive an indicator for determining a resource for a physical uplink control channel;
a determination unit configured to perform retransmission determination for the physical downlink shared channel; and
a transmission unit configured to use the resource for the physical uplink control channel determined in accordance with the received indicator to transmit acknowledgement information indicative of the retransmission determination in the physical uplink control channel.

9. A retransmission control method in a mobile station for receiving a physical downlink shared channel and a physical downlink control channel in different subframes, wherein the physical downlink control channel indicates assignment information required to receive the physical downlink shared channel, comprising:
receiving an indicator for determining a resource for a physical uplink control channel;
performing retransmission determination for the physical downlink shared channel; and
using the resource for the physical uplink control channel determined in accordance with the received indicator to transmit acknowledgement information indicative of the retransmission determination in the physical uplink control channel.
